# EUROPÄISCHE PATENTANMELDUNG

(11) **EP 4 219 221 A1**
(43) Veröffentlichungstag der Anmeldung: **02.08.2023**
(21) Anmeldenummer: 22154256.6
(22) Anmeldetag: 31.01.2022
(51) Int. Cl.: B60L 53/12, B60L 53/14, B60L 53/39, B60L 53/35, B60L 53/53

(54) **LADESYSTEM**

(71) Anmelder: Siemens Aktiengesellschaft, 80333 München (DE)
(72) Erfinder: Hertlein, Timo Alexander, 96050 Bamberg (DE); Mladenovic, Ivana, 90556 Seukendorf (DE)
(74) Vertreter: Siemens Patent Attorneys

(57) **Zusammenfassung**

Die Erfindung betrifft ein Ladesystem für die Versorgung einer Mehrzahl von Ladeplätzen, insbesondere wenigstens fünf Ladeplätzen, für die Aufladung elektrisch betriebener Fahrzeuge in einer Parkplatzanlage.

Ein erfindungsgemäßes Ladesystem für die Versorgung einer Mehrzahl von Ladeplätzen, insbesondere wenigstens fünf Ladeplätzen, für die Aufladung elektrisch betriebener Fahrzeuge in einer Parkplatzanlage, umfasst eine Mehrzahl von Anschlusseinrichtungen. Die Anschlusseinrichtungen weisen jeweils ein Ladekabel mit einer Verbindungsvorrichtung mit einem elektrisch betriebenen Fahrzeug auf. Die Anschlusseinrichtungen sind derart beweglich ausgestaltet, dass sie zu einem beliebigen der Ladeplätze bewegbar sind und dort durch ein Verbinden der Verbindungsvorrichtung eine Aufladung eines dort abgestellten elektrisch betriebenen Fahrzeugs ermöglichen. Die Anschlusseinrichtungen sind auf Bodenhöhe, im Boden der Ladeplätze oder einer die Ladeplätze umgebende Wand beweglich angeordnet. An oder im Boden oder in der Wand verlaufen Schienen, wobei die Anschlusseinrichtungen ausgestaltet sind, die Schienen zu kontaktieren. Alternativ sind die Anschlusseinrichtungen in einem Zwischenraum eines doppelten Bodens frei bewegbar angeordnet.

## Beschreibung

Die Erfindung betrifft ein Ladesystem für die Versorgung einer Mehrzahl von Ladeplätzen, insbesondere wenigstens fünf Ladeplätzen, für die Aufladung elektrisch betriebener Fahrzeuge in einer Parkplatzanlage.

Derzeit beginnen sich Elektrofahrzeuge durchzusetzen. Wegen der begrenzten Reichweite von Elektrofahrzeugen werden derzeit bei vielen Parkmöglichkeiten wie beispielsweise Parkhäusern Ladeplätze für Elektrofahrzeuge installiert. Der Bedarf an Ladeplätzen ist dabei sehr unklar. Eine Anzahl an Ladeplätzen, die heute noch ausreichend ist, kann in zwei Jahren schon deutlich zu gering sein.

Gleichzeitig stellen die Ladeplätze technisch und wirtschaftlich eine Herausforderung für die Betreiber dar. So stehen Stellplätze mit einer Lademöglichkeit in Konkurrenz mit "herkömmlichen" Stellplätzen, da sie nicht von nicht-elektrischen Fahrzeugen besetzt werden sollten. Weiterhin unterliegen die Leistungsfähigkeit der Ladeplätze und damit auch die Anschlussformen einer rasanten technischen Entwicklung. Bei eingerichteten Ladeplätzen sind stets der Platzbedarf und die Erreichbarkeit problematisch.

Es ist bekannt, aktiv bewegliche Laderoboter zu verwenden, die bei Bedarf einen passiv beweglichen Energiespeicher zu einem Ladeplatz fahren und an ein Fahrzeug anschließen. Nachteilig an dieser Lösung ist, dass die Laderoboter und Energiespeicher sicher autonom fahren müssen, um Fahrzeuge sowohl bei der Bewegung als auch beim Ladevorgang nicht zu behindern. Im Falle einer Fehlfunktion des autonomen Fahrsystems können nachteilig Zusammenstöße erfolgen. Dies offenbart sich speziell dann, wenn ein Laderoboter durch eine Fehlfunktion im Fahrweg stehen bleibt. Weiterhin können diese Laderoboter lediglich in Parkhäusern mit glattem Untergrund problemlos navigieren. Für einen Einsatz in öffentlichen Parkflächen unter freiem Himmel, welche meist einen gewölbten, beschädigten oder gepflasterten Untergrund aufweisen, ist der Laderoboter nicht geeignet.

Es ist Aufgabe der Erfindung, ein verbessertes Ladesystem für die Versorgung einer Mehrzahl von Ladeplätzen einer Parkplatzanlage anzugeben. Insbesondere sollen dabei die genannten Nachteile vermindert werden.

Diese Aufgabe wird durch ein Ladesystem mit den in Anspruch 1 angegebenen Merkmalen gelöst.

Das erfindungsgemäße Ladesystem für die Versorgung einer Mehrzahl von Ladeplätzen ist für die Aufladung elektrisch betriebener Fahrzeuge in einer Parkplatzanlage geeignet. Es eignet sich insbesondere für eine Anzahl von wenigstens fünf Ladeplätzen. Das Ladesystem umfasst eine Mehrzahl von Anschlusseinrichtungen. Die Anschlusseinrichtungen weisen jeweils ein Ladekabel mit einer Verbindungsvorrichtung mit einem elektrisch betriebenen Fahrzeug auf. Die Anschlusseinrichtungen sind derart beweglich ausgestaltet, dass sie zu einem beliebigen der Ladeplätze bewegbar sind und dort durch ein Verbinden der Verbindungsvorrichtung eine Aufladung eines dort abgestellten elektrisch betriebenen Fahrzeugs ermöglichen. Die Anschlusseinrichtungen sind auf Bodenhöhe, im Boden der Ladeplätze oder einer die Ladeplätze umgebenden Wand beweglich angeordnet. An oder im Boden oder in der Wand verlaufen Schienen, wobei die Anschlusseinrichtungen ausgestaltet sind, die Schienen zu kontaktieren. Alternativ sind die Anschlusseinrichtungen frei bewegbar in einem Zwischenraum eines doppelten Bodens angeordnet.

Frei bewegbar heißt, dass die Anschlusseinrichtungen sich in dem Zwischenraum des doppelten Bodens ohne ein Schienensystem bewegen können. In anderen Worten ist eine Bewegung der Anschlusseinrichtungen in alle Richtungen frei möglich.

Vorteilhaft wird das Ladesystem mittels der Schienen fest auf Bodenhöhe, im Boden oder an einer die Ladeplätze umgebenden Wand montiert. Die Anschlussvorrichtungen lassen sich dann beweglich auf den Schienen verschieben. Insbesondere sind die Wege, die die Anschlussvorrichtung innerhalb der Parkflächen nimmt, nicht überlappend mit Verkehrswegen der Fahrzeuge- Für den Fall, dass sich ein Kreuzen der Schienen mit dem Verkehrsweg nicht vermeiden lässt, sind die Verkehrswege vorteilhaft sicher ausgestaltbar. Insbesondere kann über Ampelsysteme geregelt werden, dass Anschlussvorrichtung nicht mit Fahrzeugen kollidieren. Alternativ oder zusätzlich zu einem Ampelsystem können Sensoren derart angeordnet sein, dass sie die Bewegung der Fahrzeuge über die Parkfläche erfassen und eine Bewegung der Anschlussvorrichtung nur erfolgt, wenn die Verkehrssituation es zulässt. Weiterhin ist es vorteilhaft mittels des Einsatzes von Schienen möglich, auch bei einem unebenen Boden, wie insbesondere Kopfsteinpflaster, ein Schienensystem zu installieren und somit ein flexibles Ladesystem nachzurüsten.

Für den Fall, dass die Anschlussvorrichtung frei bewegbar in einem doppelten Boden angeordnet ist, ergibt sich der Vorteil, dass die Anschlussvorrichtungen sich auf einer anderen Ebene als die Fahrzeuge bewegen und eine Kollision somit ausgeschlossen ist.

Im Unterschied zu existierenden fest installierten Ladesäulen ist es vorteilhaft mit dem erfindungsgemäßen Ladesystem nicht nötig, extra Parkplätze für elektrisch betriebene Fahrzeuge auszuweisen. Vielmehr ist es vorteilhaft möglich die Anschlusseinrichtungen des Ladesystems flexibel zu unterschiedlichen Parkplätzen zu führen. Dies ermöglicht vorteilhaft eine höhere Auslastung des Parkplatzes mit einer Anzahl von Fahrzeugen, welche gemischt betriebenen Motoren aufweisen.

In einer weiteren vorteilhaften Ausgestaltung und Weiterbildung der Erfindung sind die Schienen auf Bodenhöhe angeordnet und verbinden mehrere Ladeplätze, wobei die Anschlusseinrichtungen beweglich entlang der Schienen ausgestaltet sind. Somit können vorteilhaft mittels einer Anschlussvorrichtung nacheinander mehrere Fahrzeuge an unterschiedlichen Ladeplätzen geladen werden. Es ist lediglich nötig die Anschlussvorrichtungen von einem ersten Ladeplatz zu einem zweiten Ladeplatz auf den Schienen zu bewegen.

In einer weiteren vorteilhaften Ausgestaltung und Weiterbildung der Erfindung umfasst das Schienensystem für wenigstens einen Teil der Ladeplätze Abzweigschienen, die so positioniert sind, dass eine auf einer Abzweigschiene haltende Anschlusseinrichtung ein Laden eines auf dem zugeordneten Ladeplatz abgestellten Fahrzeugs ermöglicht. Das Schienensystem umfasst dabei wenigstens eine Hauptschiene, wobei die Hauptschiene so ausgestaltet ist, dass jede Abzweigschiene für eine Anschlusseinrichtung über eine Hauptschiene erreichbar ist. In dieser Ausgestaltung ist es zweckmäßig, wenn für jeden Ladeplatz eine Abzweigschiene vorhanden ist, auf die eine Anschlusseinrichtung bewegt werden kann, um an diesem Ladeplatz ein Laden zu ermöglichen. Vorteilhaft ist es mittels Abzweigschienen möglich mit wenig Schienenmaterial eine Vielzahl von Ladeplätzen zu erreichen.

In einer weiteren vorteilhaften Ausgestaltung und Weiterbildung der Erfindung ist eine Transportschiene an der Hauptschiene beweglich angeordnet. Die Anschlusseinrichtungen sind für eine Bewegung entlang der Hauptschiene auf die Transportschiene fahrbar, wobei die Transportschiene so ausgestaltet ist, dass für wenigstens einen Teil der Abzweigschienen ein Ort entlang der Hauptschiene anfahrbar ist, bei dem Abzweigschiene und Transportschiene geradlinig aneinander anschließen. Vorteilhaft können auf diese Weise mehrere Anschlussvorrichtungen über unterschiedliche Hauptschienen hinweg transportiert werden. In anderen Worten kann das Ladesystem erweitert werden, ohne dass zusätzliche Reservoirs oder Ladeanschlüsse für die Anschlusseinrichtungen erforderlich sind.

In einer weiteren vorteilhaften Ausgestaltung und Weiterbildung der Erfindung sind der Verlauf einer Abzweigschiene und der Verlauf einer Hauptschiene im Bereich der Abzweigschiene rechtwinklig zueinander angeordnet. Vorteilhafterweise wird das Schienensystem somit für eine bessere Planbarkeit und für bessere Wartungsarbeiten übersichtlich über die Parkflächen hinweg angeordnet. Weiterhin ist ein Erweitern des Schienensystems über eine Parkfläche einfach möglich, da Abzweigschienen parallel zueinander laufen und somit eine Verbindung zwischen zwei Abzweigschienen eine Verbindung von zwei Hauptschienensystemen ermöglicht.

In einer vorteilhaften Ausgestaltung und Weiterbildung der Erfindung sind die Schienen und/oder Anschlusseinrichtungen innerhalb eines doppelten Bodens oder einer doppelten Wand der Ladeplätze frei beweglich angeordnet. Vorteilhaft versperren die Schienen und/oder die Anschlussvorrichtungen somit bei Nichtgebrauch keine Verkehrswege. Weiterhin sind die Schienen und/oder die Anschlussvorrichtungen besser gegen Vandalismus geschützt als einfach zugängliche Schienen und/oder Anschlussvorrichtungen.

In einer weiteren vorteilhaften Ausgestaltung sind die Schienen als Stromschienen ausgestaltet. Die Stromschienen sind insbesondere in einem doppelten Boden oder einer doppelten Wand angeordnet. Da die Stromschienen für Menschen in der Parkplatzanlage somit nicht berührbar oder erreichbar sind, können diese offen kontaktierbar sein für die Anschlusseinrichtungen. Es ist auch möglich, dass ein Netzwerk von Stromschienen so verlegt ist, dass die Anschlusseinrichtungen mit einem sehr geringen oder völlig ohne Energiespeicher ausgestaltet sein können, da sie ständig in Kontakt mit der Stromschiene stehen. Die Ladung eines kontaktierten elektrisch betriebenen Fahrzeugs erfolgt dann, indem die Anschlusseinrichtung einerseits die Stromschiene kontaktiert und andererseits über das Ladekabel das Fahrzeug und somit eine elektrische Verbindung herstellt. In diesem Fall umfassen die Anschlusseinrichtungen zweckmäßig Stromrichter, um Spannung und Leistung auf die Bedürfnisse des Fahrzeugs ausrichten zu können.

In einer weiteren vorteilhaften Ausgestaltung und Weiterbildung der Erfindung umfasst das Ladesystem eine Mehrzahl von Transporteinrichtungen, die mit den Anschlusseinrichtungen mechanisch koppelbar ausgestaltet sind, wobei die Transporteinrichtungen mittels Motoren aktiv beweglich sind. Vorteilhaft kann somit der Transport der Anschlussvorrichtungen auf dem Schienensystem mittels Motoren erfolgen. Die Motoren können einen Nutzer der Parkfläche beim Bewegen der Anschlussvorrichtungen über das Schienensystem unterstützen. Alternativ können die Motoren die Anschlussvorrichtungen auch ohne mechanischen Eingriff eines Benutzers gemäß eines von einer Recheneinheit vorgegebenen Pfades über das Schienensystem bewegen.

In einer weiteren vorteilhaften Ausgestaltung und Weiterbildung der Erfindung umfasst das Ladesystem ein Reservoir, welches ausgestaltet ist für die gleichzeitige Aufnahme wenigstens eines Teils der Anschlusseinrichtungen, insbesondere aller Anschlusseinrichtungen. Vorteilhafterweise können die Anschlusseinrichtungen somit von den Parkflächen getrennt aufbewahrt werden. Weiterhin ist es möglich defekte Anschlusseinrichtungen aus dem Schienensystem auf den Parkflächen in das Reservoir zu bringen, um zu verhindern, dass diese das Schienensystem unnötig versperren. Weiterhin können die Anschlusseinrichtungen in dem Reservoir vor Witterungseinflüssen oder Vandalismus geschützt werden.

In einer weiteren vorteilhaften Ausgestaltung und Weiterbildung der Erfindung umfassen die Anschlusseinrichtungen einen Batteriespeicher. Insbesondere werden dann Schienen eingesetzt, welche nicht bestromt sind. Weiterhin ist es möglich, bei dem Einsatz von Stromschienen und einem Batteriespeicher der Anschlussvorrichtung das Stromnetz zu entlasten. Die Anschlussvorrichtungen können den Batteriespeicher dann Laden, wenn Strom insbesondere durch erneuerbare Energien im Überfluss vorhanden ist und insbesondere kostengünstig und mit einem geringen Kohlenstoffdioxid-Fußabdruck aus dem Stromnetz entnommen werden kann.

In einer weiteren vorteilhaften Ausgestaltung und Weiterbildung der Erfindung ist das Reservoir ausgestaltet, die elektrische Aufladung von dort aufgenommenen Anschlusseinrichtungen durchzuführen. Vorteilhaft können somit Anschlusseinrichtungen mit Batteriespeicher außerhalb des Schienensystems auf der Parkfläche geladen werden.

In einer weiteren vorteilhaften Ausgestaltung und Weiterbildung der Erfindung ist die Verbindungsvorrichtung als Steckvorrichtung ausgestaltet und die Anschlusseinrichtung weist eine Vorrichtung zum Anheben der Steckvorrichtung aus Bodenhöhe auf. Vorteilhaft kann so das Anstecken der Anschlusseinrichtung mittels der Steckvorrichtung an ein Fahrzeug durch den Fahrzeugnutzer unterstützt werden. Weiterhin ist es auch möglich, mittels eines von einer Recheneinheit vorgegebenen Zeitplans ein Fahrzeug zu einem bestimmten Zeitpunkt auf einen bestimmten Ladeplatz automatisch an die Anschlussvorrichtungen anzubinden. Es kann ebenso über die Vorrichtung die Anschlussvorrichtungen aus einem zu geladenen Fahrzeug automatisch entfernt werden. Besonders vorteilhaft kann die Vorrichtung einen Schwenkarm und/oder eine Kabeltrommel umfassen.

In einer weiteren vorteilhaften Ausgestaltung und Weiterbildung der Erfindung ist die Verbindungsvorrichtung als Ladeplatte zum induktiven Laden eines elektrisch betreibbaren Fahrzeugs ausgestaltet. Vorteilhaft wird die Anschlussvorrichtungen somit nicht in das zu ladende Fahrzeug gesteckt, sondern es ist lediglich nötig, dass die Ladeplatte unterhalb des Fahrzeugs auf eine vordefinierte Höhe angehoben wird, um den Ladevorgang zu starten.

In einer weiteren vorteilhaften Ausgestaltung und Weiterbildung der Erfindung ist die Ladeplatte in der Anschlussvorrichtung angeordnet oder außerhalb der Anschlussvorrichtung angeordnet. In anderen Worten klappt die Ladeplatte aus der Anschlussvorrichtungen heraus, wenn sie in der Anschlussvorrichtung angeordnet ist. Die Ladeplatte ist dann insbesondere ausfahrbar und/oder klappbar oder faltbar ausgestaltet. Alternativ ist die Ladeplatte außerhalb der Anschlussvorrichtung angeordnet und wird insbesondere mittels der Ladeplatte zugeordneten Motoren getrennt von der Ladeplatte über das Schienensystem bewegt.

Vorteilhafte Ausgestaltungen des erfindungsgemäßen Ladevorrichtung gehen aus den abhängigen Ansprüchen hervor. Dabei kann die Ausführungsform der unabhängigen Ansprüche mit den Merkmalen eines der Unteransprüche oder vorzugsweise auch mit denen aus mehreren Unteransprüchen kombiniert werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: eine Seitenansicht auf eine Parkfläche mit einem Ladesystem umfassend ein Schienensystem und mit einem elektrisch betriebenen Fahrzeug;
- Figur 2: eine Aufsicht auf eine Parkfläche mit einem Ladesystem mit einem an Boden angeordneten Schienensystem und beweglichen Anschlusseinrichtungen zum Laden eines elektrischen Fahrzeugs;
- Figur 3: eine räumliche Darstellung eines Ausschnitts aus dem Schienensystem;
- Figur 4: eine Aufsicht auf eine Parkfläche mit einem Ladesystem mit einem doppelten Boden und einem bestromten Schienensystem;
- Figur 5: eine Seitenansicht auf eine Parkfläche mit einem Ladesystem mit einem doppelten Boden und einem elektrisch betriebenen Fahrzeug;
- Figur 6: eine Aufsicht auf eine Parkfläche mit einem Schienensystem und einer induktiven Ladeplatte;
- Figur 7: eine Seitenansicht einer Parkfläche mit einem Ladesystem umfassend ein in einer Wand verlaufendes Ladesystem;
- Figur 8: eine Aufsicht auf eine Parkfläche zum Längsparken mit einem Ladesystem mit einem Schienensystem und einer Anschlussvorrichtung mit integrierter Ladeplatte;
- Figur 9: eine Seitenansicht einer Parkfläche mit einem Ladesystem mit einem Schienensystem und einer Anschlussvorrichtung mit integrierter Ladeplatte für ein induktives Laden.

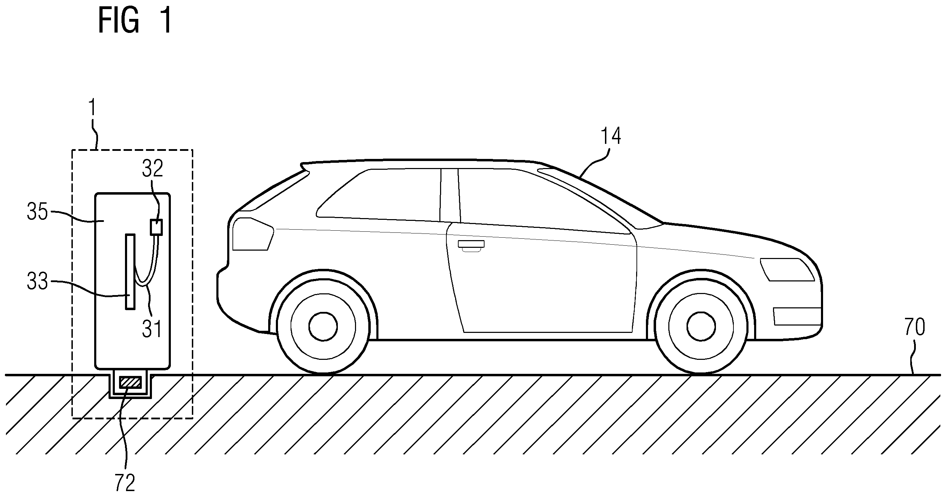

Die Figuren 1 bis 3 zeigen ein erstes Ausführungsbeispiel für die Erfindung. Sie zeigen eine Parkfläche 70 mit 33 Stellplätzen 13 von denen acht Parkplätze zeitglich zum Laden eines elektrisch angetriebenen Fahrzeugs mittels des Ladesystems herangezogen werden können. Dazu umfasst das Ladesystem acht Anschlusseinrichtungen 35. Weiterhin umfasst das Ladesystem ein Schienensystem mit Hauptschienen 72 und Abzweigschienen 71. Die Abzweigschienen 71 sind dabei den Stellplätzen 13 zugeordnet, während die Hauptschienen 72 die Verbindung zwischen den Abzweigschienen 71 ermöglichen. Die Schienen sind am Boden der Parkfläche 70 angeordnet, insbesondere in den Boden eingelassen, ähnlich Straßenbahnschienen.

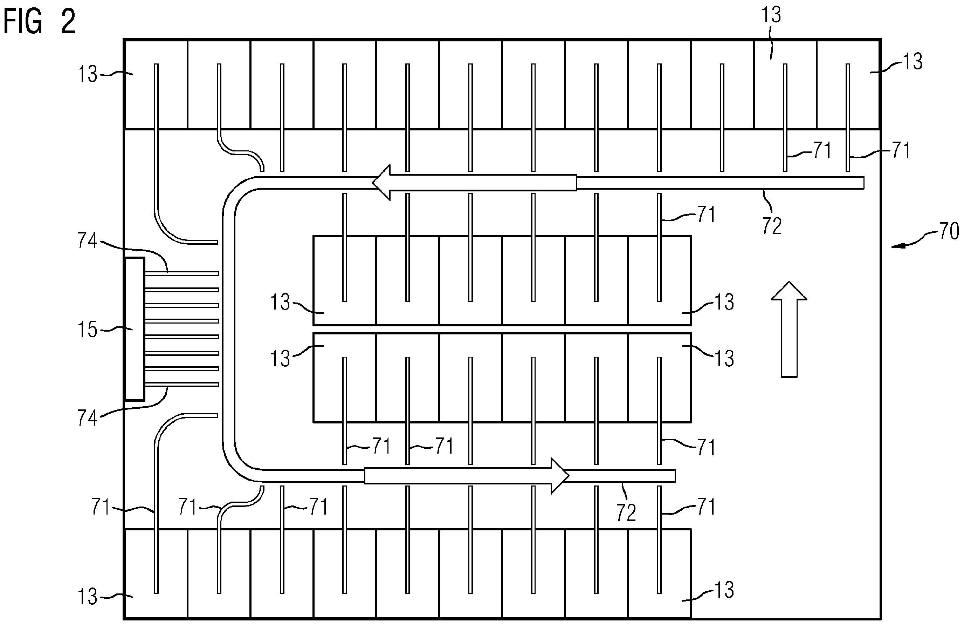

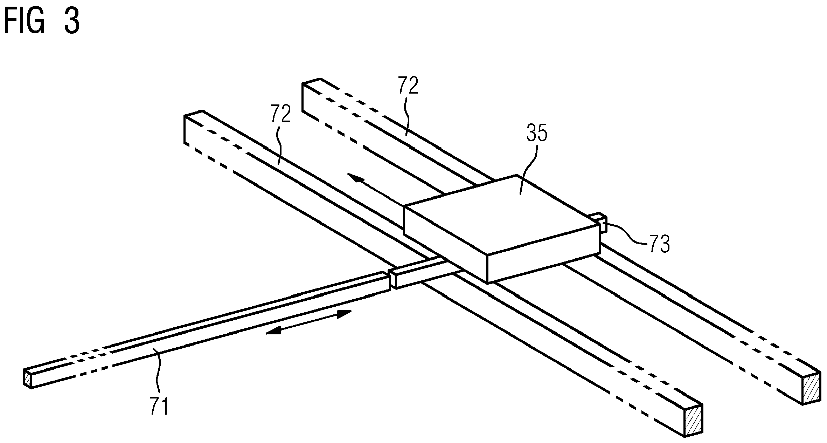

Dabei ist das Schienensystem in Hauptschienen 72 und Abzweigschienen 71 unterteilt, wobei das Schienensystem so gestaltet ist, dass die Hauptschienen 72 im Normalbetrieb frei durchfahrbar bleiben, auch wenn sich ein oder mehrere Anschlusseinrichtungen 35 mit Energiespeicher im Ladebetrieb an Stellplätzen 13 befinden. Das im ersten Ausführungsbeispiel verwendete Schienensystem arbeitet dabei mit einer Hauptschiene 72, die in diesem Beispiel zwei parallele Schienenstränge umfasst, wie es in den Figuren 2 und 3 dargestellt ist. Quer zum Verlauf der Schienenstränge ist an der Hauptschiene 72 eine Transportschiene 73 angeordnet, die entlang der Hauptschiene 72 nach Art einer Laufkatze verfahrbar ist. Für die Befestigung der Anschlusseinrichtung 35 an den Schienen, als auch für das Schienensystem kommen beispielsweise Zahnradsysteme, Haspelfahrwerk oder Kugellagersysteme in Frage.

Die Abzweigschienen 71 sind am Boden der Parkfläche 70 so angeordnet, dass sie auf einem gemeinsamen Niveau liegen. Weiterhin sind die Abzweigschienen 71 so angeordnet, dass die Transportschiene 73 für jede der Abzweigschienen 71 eine Parkposition anfahren und einnehmen kann, in der die Transportschiene 73 und die Abzweigschiene 71 geradlinig und nahezu bündig aneinander anschließen.

Figur 3 zeigt eine solche Parkposition. In dieser Parkposition kann eine Anschlusseinrichtung 35 von der Transportschiene 73 auf die Abzweigschiene 71 überwechseln und umgekehrt. Die Reservoirschienen 74 der zentralen Ladestelle 15 sind ebenso gestaltet. Dadurch wird ein weichenloses Schienensystem geschaffen, auf die Anschlusseinrichtung 35 stets so an einem Stellplatz abgestellt werden können, dass die Hauptschiene 72 frei bleibt. In der Figur sind zwei parallele Hauptschienen 72 gezeigt. Es ist ebenso möglich, lediglich eine Hauptschiene einsetzen.

Es ist möglich, dass die Anschlusseinrichtung selbst motorisiert ist, um sich zu bewegen oder, dass die acht Anschlusseinrichtungen mit Transportrobotern, insbesondere einem Transportroboter, bewegt werden. Transportroboter können auch zusätzliche Energiespeicher, welche zu den Anschlussvorrichtungen gebracht werden sollen, transportieren, bzw. "anschieben".

Dabei ist es möglich, dass das gesamte Ladesystem mit einem einzigen Transportroboter und einer Transportschiene 73 arbeitet, es ist aber auch möglich, dass verschiedene Teile der Hauptschiene 72 von jeweils eigenen Transportschienen 73 versorgt werden. In dem in Figur 2 gezeigten Schienensystem können die Transportschienen 73 nicht aneinander vorbeifahren. Es ist aber möglich, die Hauptschiene 72 zu einem Kreis zu schließen und dadurch auch mehr als eine Transportschiene 73 zu verwenden, um alle der Stellplätze zu erreichen.

Neben einem einzelnen elektrischen Kreis kann das Schienensystem auch mehrere elektrische Kreise aufweisen. Dabei ist es vorteilhaft, wenn der elektrische Anschluss eine Lastsymmetrierung der Last an der Anschlussstelle ermöglicht. Die elektrischen Kreise können dabei als DC- und/oder AC-Kreise ausgeführt sein.

Das beschriebene Schienensystem erlaubt auch ein Überwechseln zwischen parallel verlaufenden Hauptschienen 72. Dabei müssen zwei Transportschienen 73 in eine derartige Position gefahren werden, dass sie zusammen eine Linie bilden. Eine an der Transportschiene angeordnete Anschlusseinrichtung 35 kann sodann von der einen Transportschiene 73 zur anderen Transportschiene 73 überwechseln. Es ist auch möglich, dass für ein solches Überwechseln eine spezielle Zwischenschiene vorgesehen ist, an deren einem Ende die erste Transportschiene 73 anhält und an deren anderem Ende die zweite Transportschiene 73 anhält.

In allen Ausführungsbeispielen ohne bestromte Schienen muss eine Verbindung zwischen dem jeweiligen Ladegerät, also beispielsweise einem Energiespeicher der Anschlussvorrichtung 35, und dem Fahrzeug 14 hergestellt werden. Dazu wird ein Ladestecker in das Fahrzeug 14 eingesteckt. Der Ladestecker fährt dafür von Bodenhöhe auf eine definierte Höhe nach oben. Hinsichtlich des Herauf- und Zurückfahrens des Ladekabels und der Ausführung der Beweglichkeit des Ladekabels sind unterschiedliche Umsetzungsvarianten möglich. Eine Möglichkeit ist, dass das System an einer drehbaren Stange, welche insbesondere mit dem Energiespeicher verbunden ist, aufgehängt ist, wobei der Schwenkbereich so ausgelegt ist, dass mit dem Ladestecker verschiedene mögliche Positionen und Höhen von Ladebuchsen an den Fahrzeugen erreichbar sind. Eine weitere Variante ist eine vertikale Führungsschiene, an der der Ladestecker nach oben fährt. Durch diese vertikale Schiene wird gleichzeitig die Endposition definiert.

Der Ladestecker befindet sich sodann auf einer erreichbaren Höhe und kann durch den Nutzer herangezogen werden. Bevor das Fahrzeug aufgeladen wird, erfolgt noch eine weitere Nutzeridentifizierung, beispielsweise über das Parkticket, um eine eindeutige und korrekte Zuweisung der Ladesäule und evtl. auch der Abrechnung zu gewährleisten.

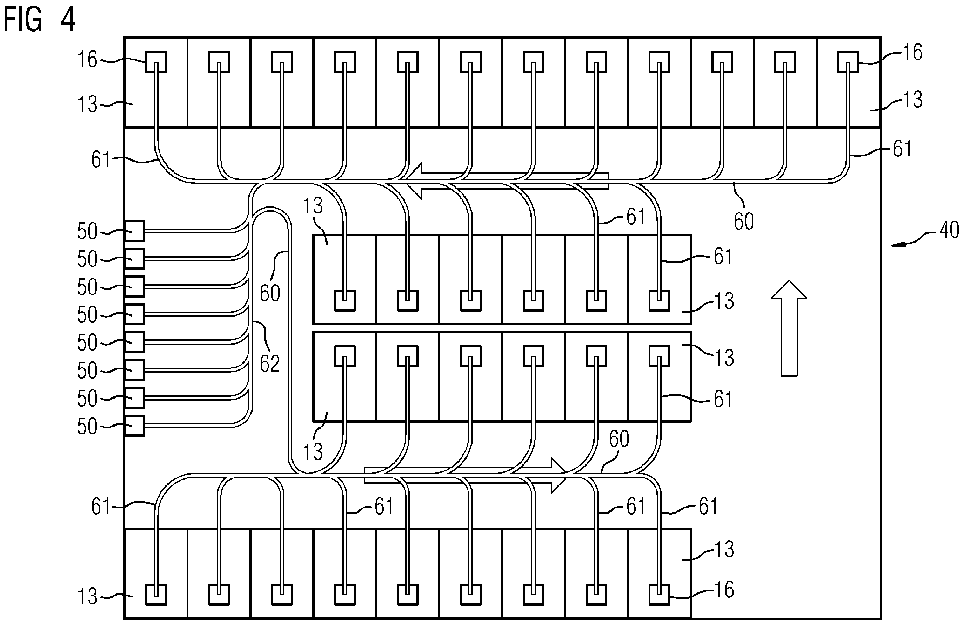

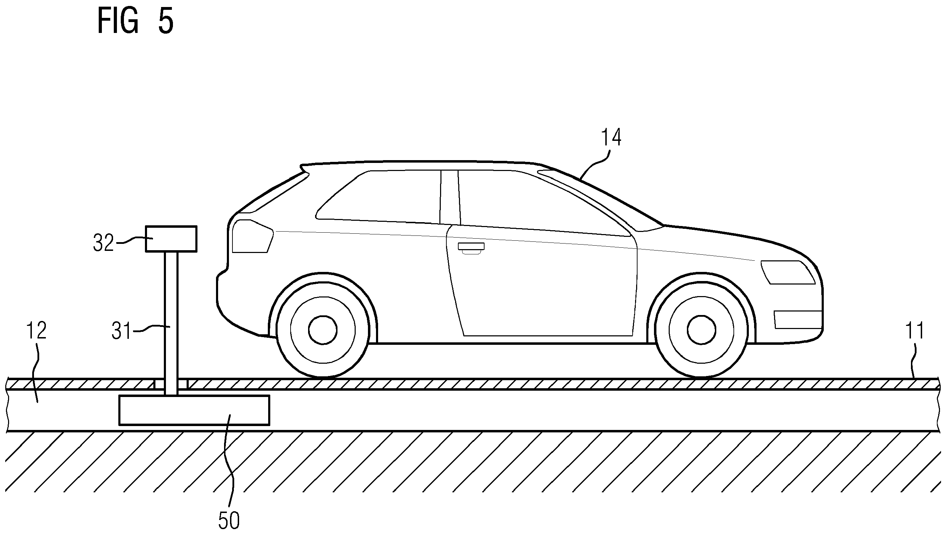

Ein zweites Ausführungsbeispiel der Erfindung ist in den Figuren 4 und 5 dargestellt. In dem zweiten Ausführungsbeispiel handelt es sich wiederum um ein Ladesystem für die Stellplätze einer Parkfläche 40. Figur 4 zeigt dabei eine Aufsicht auf die Parkflächen 40. Die Parkflächen 40 weisen einen doppelten Boden 11 auf, d.h. über den eigentlich tragenden Boden der Parkfläche 40 oder eines Parkdecks eines Parkhauses ist ein weiterer Boden 11 eingezogen, sodass ein Zwischenraum 12 gebildet ist. Figur 5 zeigt dabei eine Seitenansicht einer Stellfläche 13 mit einem doppelten Boden 11 mit einem Zwischenraum 12.

Die Parkfläche 40 umfasst in diesem Beispiel wiederum 33 Stellplätze 13 für Autos. Für diese sollen acht Ladeplätze geschaffen werden. Dazu umfasst das Ladesystem als Anschlusseinrichtungen acht Koppeleinrichtungen 50. Weiterhin umfasst das Ladesystem ein Schienensystem mit Hauptschienen 60 und Abzweigschienen 61. Die Abzweigschienen 61 sind dabei den Stellplätzen 13 zugeordnet, während die Hauptschienen 60 die Verbindung zwischen den Abzweigschienen 61 ermöglichen. Die Abzweigschienen 61 weisen an ihrem Ende einen Schienenabschlussvorrichtung 16 auf. Diese verhindert ein Herausgleiten der Koppeleinrichtung 50 aus dem Schienensystem.

In einer weiteren, hier nicht dargestellten, Ausgestaltung wird als Koppeleinrichtung 50 ein System aus Transportrobotern und Energiespeichern eingesetzt. Die Transportroboter und die Energiespeicher sind an den Schienen 71, 72 beweglich angeordnet.

Das Ladesystem weist eine Reservoirschiene 62 auf, auf der die Koppeleinrichtungen 50 geparkt sind, solange sie nicht benötigt werden. Die Koppeleinrichtungen 50 sind ausgestaltet zur aktiven Bewegung entlang der Schienen 60, 61. Weiterhin umfassen sie ein Ladekabel 31 mit Stecker 32.

Wird ein Ladeplatz angefordert, dann fährt die vorderste Koppeleinrichtung 50 auf die Hauptschiene 60 auf und zu dem betroffenen Stellplatz. Dort fährt die Koppeleinrichtung 50 auf die entsprechende Abzweigschiene 61.

Besonders vorteilhaft ist in diesem Fall, dass die Schienen 60, 61 des Ladesystems selbst unter Spannung stehen und somit eine Stromversorgung sowohl für die Bewegung der Koppeleinrichtungen 50 als auch für das Laden der Fahrzeuge 14 bereitstellen. Die Koppeleinrichtung 50 stellt also über das Ladekabel 31 und den Stecker 32 eine Verbindung zwischen der stromtragenden Abzweigschiene 61 und dem Fahrzeug 14 her. Dabei ist es möglich, dass die Koppeleinrichtungen 50 Stromrichter umfassen, die aus dem bereitgestellten Strom der Schienen 60, 61 die benötigte Spannungs- und Stromform erzeugen. Beispielsweise kann auf den Schienen 60, 61 eine Gleichspannung vorhanden sein und die Koppeleinrichtung 50 erzeugt daraus eine Wechselspannung für einen Wechselspannungsanschluss eines Fahrzeugs 14. Die Schienen 60, 61 können aber auch eine Wechselspannung tragen.

Vorteilhaft entfallen bei dieser Ausgestaltung die Akkumulatoren, die in der Anschlussvorrichtung 35 des ersten Ausführungsbeispiels vorhanden sind, da stets eine direkte Kopplung zu einer Stromquelle vorhanden ist. Diese offene Stromführung ist vor allem deshalb möglich, weil die Schienen 60, 61 innerhalb des doppelten Bodens 11 angeordnet sind und somit nicht erreichbar sind für Fußgänger und Fahrzeuge. In dieser Ausgestaltung fallen die Koppeleinrichtungen 50 im Vergleich zu bekannten Systemen sehr einfach aus, da Energiespeicher und Sicherheitssysteme entfallen können.

In einer alternativen, hier nicht dargestellten, Ausführung, ist die Anschlusseinrichtung oder die Koppeleinrichtung 50, in dem Zwischenraum autonom ohne Schienen beweglich. Die Koppeleinrichtung fährt also autonom auf direktem Weg von einem Reservoir zu dem zu ladendem Fahrzeug 14.

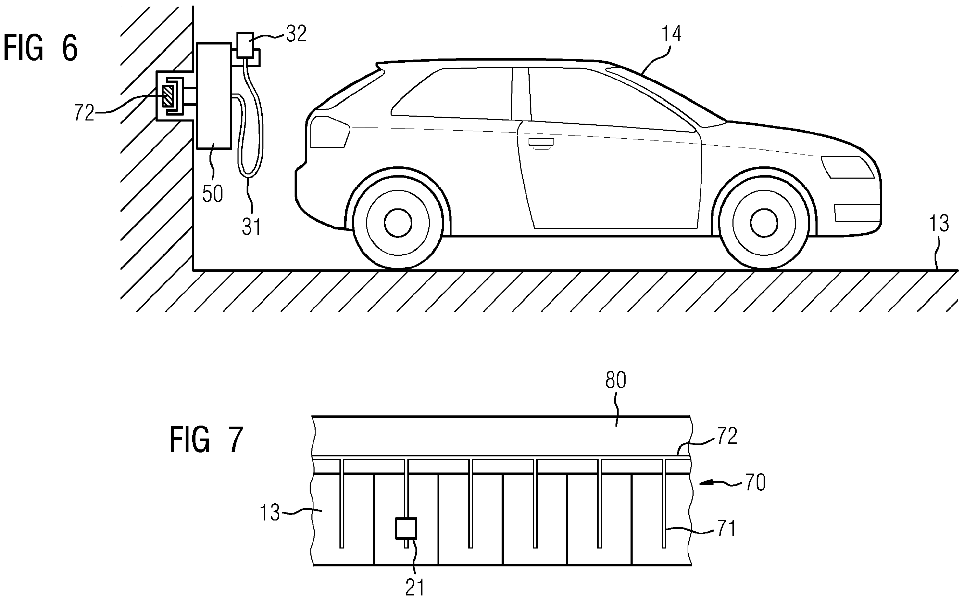

In einem weiteren in Figur 6 dargestellten dritten Ausführungsbeispiel ist die Hauptschiene 71 in der Wand montiert. Dies eignet sich insbesondere für Parkflächen oder Stellplätze 13, die an wenigstens einer Seite an eine Wand angrenzen. An der Schiene ist eine als Kopplungseinrichtung 50 ausgestaltete Anschlusseinrichtung beweglich angeordnet. Weiterhin umfasst die Anschlussvorrichtung ein Ladekabel 31 und einen Stecker 32. Das Schienensystem umfasst in diesem Ausführungsbeispiel lediglich Hauptschienen 72. Insbesondere ist nur eine Hauptschiene 72 parallel zum Boden angeordnet, welche insbesondere wenigstens zwei und maximal zehn Stellplätze 13 verbindet. Es sind aber auch weitere Anordnungen des Schienensystems möglich. Vorteilhaft ist eine Wandmontage platzsparend, so dass Laufwege oder Fahrtwege nicht versperrt werden.

Figur 7 zeigt ein viertes Ausführungsbeispiel mit Parkflächen 70, welche direkt an einen Bürgersteig 80 angrenzen. Wie bereits im ersten Ausführungsbeispiel beschrieben, sind die Stellplätze 13 über ein Schienensystem zum Laden eines elektrischen Fahrzeugs vorgesehen. Die Hauptschiene 72 läuft parallel zur Bordsteinkante des Gehwegs 80. Die Hauptschiene 72 und die Abzweigschiene 71 sind insbesondere in den Boden eingelassen, um ein Stolpern von Fußgängern zu vermeiden. Auf der Abzweigschiene 72 ist in diesem Ausführungsbeispiel eine Ladeplatte 21 zum induktiven Laden eines Fahrzeugs bewegbar angeordnet. Die Ladeplatte 21 kann auf der Abzweigschiene 71 parallel zum Boden bewegt werden. Die Ladeplatte kann auch über eine in Figur 6 nicht dargestellte Hubvorrichtung in der Höhe verstellt werden, so dass die Entfernung der Ladeplatte 21 zu dem zu ladenden Fahrzeug individuell eingestellt werden kann.

Nach einem abgeschlossenen Ladevorgang wird die Platte 21 auf eine Transporthöhe abgesenkt und zu einem weiteren zu ladenden Fahrzeug bewegt oder in einen Reservoirbereich zwischengeparkt. Die Ladeplatte 21 kann mit einem Energiespeicher über ein Kabel verbunden sind. Die Kabel sind insbesondere im Boden zwischen den Schienen angeordnet.

Die Ladeplatte 21 kann aber auch über stromführende Schienen mit elektrischer Energie versorgt werden. Im letzten Fall sind die Schienen - im Unterschied zu diesem Ausführungsbeispiel- in einem Zwischenraum eines doppelten Bodens angeordnet.

Es ist aber für diese Anordnung des Schienensystems des vierten Beispiels auch möglich, wenn auch nicht dargestellt, auf dem Schienensystem eine Anschlussvorrichtung 35 oder eine Koppeleinheit 50 anstelle der induktiven Ladeplatte 21 einzusetzen.

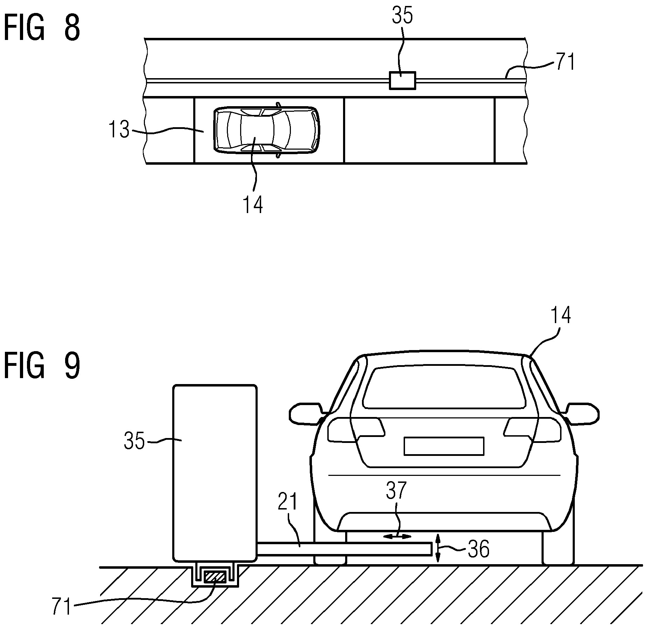

Die Figuren 8 und 9 zeigen ein fünftes Ausführungsbeispiel, welches wiederum ein induktives Laden von Fahrzeugen ermöglicht. Wie Figur 8 darstellt, ist diese Ausführung insbesondere auch für Parkflächen möglich, auf denen die Stellplätze 13 und somit auch das zu landende Fahrzeug 14 längs zur Fahrtrichtung angeordnet sind. Das gezeigte System verfügt in diesem Beispiel wiederum um ein Schienensystem, wie im ersten Ausführungsbeispiel gezeigt. In Figur 8 ist ein Ausschnitt des Schienensystems mit einer Abzweigschiene 71 gezeigt.

In diesem Beispiel ist die Anschlusseinrichtung 35 auf einer Abzweigschiene 71 beweglich angeordnet. Weiterhin umfasst die Anschlusseinrichtung 35 eine Ladeplatte 21 zum induktiven Laden. Diese Ladeplatte ist in der Anschlusseinrichtung 35 angeordnet. Sobald die Anschlusseinrichtung 35 eine Ladeposition vor oder, hier dargestellt, neben dem Auto erreicht, wird die Ladeplatte 21 aus der Anschlusseinrichtung 21 herausgeklappt oder herausgefahren. Die Ladeplatte 21 ist in einer ersten Bewegungsrichtung 36 in der Höhe verstellbar. Weiterhin ist die Position der Ladeplatte 21 in einer zweiten Bewegungsrichtung 37 in der Position in Richtung der Fahrzeugmitte hin verstellbar. Dies ermöglicht vorteilhaft eine optimale Anordnung der Ladeplatte 21 in Relation zum zu ladenden Fahrzeug.

Alternativ zur Anschlusseinrichtung 35 mit induktiver Ladeplatte 21 kann ebenso eine Anschlussvorrichtung 35 mit Kabel und Stecker zum kabelgebundenen Laden eingesetzt werden.

Allen Ausführungsbeispielen ist gemein, dass, wenn ein elektrisch betriebenes Fahrzeug 14 in auf die Parkfläche fährt und dort parkt, ein Ladeservice über eine Smartphone-App für den verwendeten Stellplatz gebucht werden kann. Aus dem Stand der Technik ist bekannt, dass hierfür Techniken zur Authentifizierung und sicheren Bezahlung verwendet werden können. Die Anforderung kann auch über ein zentrales System, beispielsweise über Zahlautomaten erfolgen. Ist die Buchung für den Ladeservice erfolgreich, dann veranlasst eine in den Figuren nicht eingezeichnete Steuerungseinrichtung, die auch dezentral angeordnet sein kann, einen Anschlusseinrichtungen 35, eine der Kopplungseinrichtungen 50 oder einen Transportroboter, die gerade nicht in Benutzung sind zu dem Stellplatz zu transportieren. Es ist möglich, dass die Anschlusseinrichtung 35 oder die Kopplungseinrichtung 50 über eine Transportantriebsvorrichtung verfügen und sich selbst aktiv bewegen. Es ist alternativ ebenso möglich, dass eine Anschlusseinrichtung 35, eine Kopplungseinrichtung 50 oder ein Energiespeieher mittels eines Transportroboter bewegt werden. Der Transportroboter fährt die Anschlusseinrichtung 35, die Kopplungseinrichtung 50 oder den Energiespeicher an und koppelt sich an diesen mechanisch. Der Transportroboter fährt dann mit der Anschlusseinrichtung 35, der Kopplungseinrichtung 50 oder dem Energiespeicher zu dem Stellplatz des Fahrzeugs 14. Die Navigation kann dabei per GPS oder über die Koordinaten des Stellplatzes erfolgen.

Nach der Identifikation des Nutzers kann dieser den Ladestecker manuell an das Fahrzeug anstecken und die Ladung kann starten. Es ist ebenso möglich, dass das Anstecken des Ladesteckers automatisiert, insbesondere mittels eines steuerbaren Bereitstellungsarms, erfolgt. Nach Beendigung des Ladevorganges kann der Ladestecker entweder manuell abgesteckt werden oder automatisch von der Ladebuchse des Fahrzeuges getrennt werden und das Ladekabel wird wieder in die Ladestation eingefahren. Ein automatisches Abstecken erhöht die Effizienz des Ladesystems, da die Anschlusseinrichtung 35, der Energiespeicher oder die Koppeleinrichtung 50 nach dem Aufladen eines Fahrzeuges 14 direkt für das Aufladen eines anderen Fahrzeuges 14 zur Verfügung stehen. In einem Ladesystem mit Transportrobotern und Energiespeichern wird der Energiespeicher dann je nach Füllstand zurück zur zentralen Ladestelle 15 gefahren.

Ein automatisiertes Anstecken und Abstecken des Fahrzeugs ermöglicht insbesondere das effiziente Laden von Fahrzeugflotten, insbesondere von Bussen oder Taxis, über Nacht. Vorteilhaft muss nicht für jedes Fahrzeug eine Ladesäule vorhanden sein. Nachdem ein erstes Flottenmitglied ausreichend geladen ist, kann das Ladesystem mit dem Energiespeichern, einer Koppeleinrichtung 50 oder einer Anschlusseinrichtung 35 zu dem nächsten zu ladenden Fahrzeug weiterbewegt werden.

### Bezugszeichen

- 10, 40, 70: Parkfläche
- 11: doppelter Boden
- 12: Zwischenraum
- 13: Stellplatz
- 14: Fahrzeug
- 15: zentrale Ladestelle
- 16: Schienenabschluss
- 21: Ladeplatte zum induktiven Laden
- 31: Ladekabel
- 32: Stecker
- 33: Schwenkarm
- 35: Anschlusseinrichtung
- 36: erste Bewegungsrichtung
- 37: zweite Bewegungsrichtung
- 50: Koppeleinrichtung
- 60, 72: Hauptschiene
- 61, 71: Abzweigschiene
- 73: Transportschiene
- 74: Reservoirschiene
- 80: Gehweg

## Patentansprüche

1. Ladesystem (1) für die Versorgung einer Mehrzahl von Ladeplätzen (13), insbesondere wenigstens zwei Ladeplätzen (13), für die Aufladung elektrisch betriebener Fahrzeuge (14) in einer Parkplatzanlage (40, 70), umfassend eine Mehrzahl von Anschlusseinrichtungen (35, 50), wobei
- die Anschlusseinrichtungen (35, 50) jeweils ein Ladekabel (31) mit einer Verbindungsvorrichtung (21, 32) mit einem elektrisch betriebenen Fahrzeug (14) aufweisen,
- die Anschlusseinrichtungen (35, 50) derart beweglich ausgestaltet sind, dass sie zu einem beliebigen der Ladeplätze (13) bewegbar sind und dort durch ein Verbinden der Verbindungsvorrichtung (50) eine Aufladung eines dort abgestellten elektrisch betriebenen Fahrzeugs (14) ermöglichen,
- die Anschlusseinrichtungen (35, 50) auf Bodenhöhe, im Boden der Ladeplätze oder einer die Ladeplätze umgebende Wand beweglich angeordnet sind,
- an oder im Boden oder in der Wand Schienen (60, 61, 71, 72, 73) verlaufen, wobei die Anschlusseinrichtungen (35, 50) ausgestaltet sind, die Schienen (60, 61, 71, 72, 73) zu kontaktieren oder die Anschlusseinrichtungen (35, 50) in einem Zwischenraum eines doppelten Bodens frei bewegbar angeordnet sind.

2. Ladesystem (1) nach Anspruch 1 mit einem auf Bodenhöhe angeordneten die Ladeplätze (13) verbindenden Schienensystem mit Schienen (60, 61, 71, 72, 73), wobei die Anschlusseinrichtungen (35, 50) zur Bewegung entlang der Schienen (60, 61, 71, 72, 73) ausgestaltet sind.

3. Ladesystem (1) nach einem der vorhergehenden Ansprüche, bei dem das Schienensystem für wenigstens einen Teil der Ladeplätze (13) Abzweigschienen (61, 71) umfasst, die so positioniert sind, dass eine auf einer Abzweigschiene (61, 71) haltende Anschlusseinrichtung (35, 50) ein Laden eines auf dem zugeordneten Ladeplatz (13) abgestellten Fahrzeugs (14) ermöglicht, und bei dem das Schienensystem wenigstens eine Hauptschiene (60, 72) umfasst, wobei die Hauptschiene (60, 72) so ausgestaltet ist, dass jede Abzweigschiene (61, 71) für eine Anschlusseinrichtung (35, 50) über eine Hauptschiene (60, 72) erreichbar ist.

4. Ladesystem (1) nach Anspruch 3, bei dem eine Transportschiene (73) an der Hauptschiene (60, 72) beweglich angeordnet ist und die Anschlusseinrichtungen (35, 50) für eine Bewegung entlang der Hauptschiene (60, 72) auf die Transportschiene (73) fahrbar sind, wobei die Transportschiene (73) so gestaltet ist, dass für wenigstens einen Teil der Abzweigschienen (61, 71) ein Ort entlang der Hauptschiene (60, 72) anfahrbar ist, bei dem Abzweigschiene (61, 71) und Transportschiene (73) geradlinig aneinander anschließen.

5. Ladesystem (1) nach einem der Ansprüche 3 bis 4, bei dem der Verlauf einer Abzweigschiene (61, 71) und der Verlauf einer Hauptschiene (60, 72) im Bereich der Abzweigschiene (61, 71) rechtwinklig zueinander sind.

6. Ladesystem (1) nach einem der vorangehenden Ansprüche, bei dem die Schienen (60, 61, 71, 72, 73) und/oder Anschlusseinrichtungen (35, 50) innerhalb eines doppelten Bodens (11) oder doppelten Wand der Ladeplätze (13) frei beweglich angeordnet sind.

7. Ladesystem (1) nach einem der vorhergehenden Ansprüche, wobei die Schienen (60, 61, 71, 72, 73) als Stromschienen ausgestaltet sind.

8. Ladesystem (1) nach einem der vorangehenden Ansprüche mit einer Mehrzahl von Transporteinrichtungen, die mit den Anschlusseinrichtungen (35, 50) mechanisch koppelbar ausgestaltet sind, wobei die Transporteinrichtungen mittels Motoren aktiv beweglich sind.

9. Ladesystem (1) nach einem der vorangehenden Ansprüche mit einem Reservoir (15), ausgestaltet für die gleichzeitige Aufnahme wenigstens eines Teils der Anschlusseinrichtungen (35, 50), insbesondere aller Anschlusseinrichtungen (35, 50).

10. Ladesystem (1) nach einem der vorhergehenden Ansprüche, wobei die Anschlusseinrichtungen (35, 50) einen Batteriespeicher umfassen.

11. Ladesystem (1) nach Anspruch 9 oder 10, bei dem das Reservoir (15) für die elektrische Aufladung von dort aufgenommenen Anschlusseinrichtungen (35, 50) ausgestaltet ist.

12. Ladesystem (1) nach einem der vorhergehenden Ansprüche, bei dem die Verbindungsvorrichtung als Steckvorrichtung (32) ausgestaltet ist und die Anschlusseinrichtungen (35, 50) eine Vorrichtung zum Anheben der Steckvorrichtung (32) aus Bodenhöhe aufweisen.

13. Ladesystem (1) nach einem der Ansprüche 1 bis 11, wobei die Verbindungsvorrichtung als Ladeplatte (21) zum induktiven Laden eines elektrisch betreibbaren Fahrzeugs (14) ausgestaltet ist.

14. Ladesystem (1) nach Anspruch 13, wobei die Ladeplatte (21) in der Anschlusseinrichtung (35, 50) angeordnet ist oder außerhalb der Anschlusseinrichtung (35, 50) angeordnet ist.

15. Ladesystem (1) nach einem der Ansprüche 13 oder 14, wobei die Ladeplatte (21) von einer ersten Höhe des Schienensystems im Boden zu einer zweiten Ladehöhe für ein Fahrzeug (14) für einen Ladevorgang anhebbar ist.
